Europäisches Patentamt

European Patent Office

Office européen des brevets

(11) Numéro de publication: **0 332 553 B1**

(12) **FASCICULE DE BREVET EUROPEEN**

(45) Date de publication de fascicule du brevet: **10.11.93**  (51) Int. Cl.5: **H04N 7/13**

(21) Numéro de dépôt: **89460007.1**

(22) Date de dépôt: **02.03.89**

(54) **Procédé de réallocation de choix de traitement de sous-échantillonnage, sur critère de réduction de débit d'une séquence de données d'assistance à la reconstitution d'une image électronique sous-échantillonnée.**

(30) Priorité: **02.03.88 FR 8802650**

(43) Date de publication de la demande:
**13.09.89 Bulletin  89/37**

(45) Mention de la délivrance du brevet:
**10.11.93 Bulletin  93/45**

(84) Etats contractants désignés:
**DE GB NL**

(56) Documents cités:
**EP-A- 0 248 711**
**US-A- 4 605 963**

**GLOBAL TELECOMMUNICATIONS CONFE-RENCE, Tokyo, 15 - 18 novembre 1987, vol. 1,pages 411-415, IEEE, New York, US; R. KIS-HIMOTO et al.: "A high-definition TV tran-smission system using adaptive subsam-pling"**

(73) Titulaire: **FRANCE TELECOM**
**6, Place d'Alleray**
**F-75015 Paris(FR)**

Titulaire: **TELEDIFFUSION DE FRANCE S.A.**
**21-27, rue Barbès**
**F-92542 Montrouge Cédex(FR)**

(72) Inventeur: **Henot, Jean-Pierre**
**Le Portail**
**La Touche-Martin**
**F-35510 Thorigne(FR)**

(74) Mandataire: **Corlau, Vincent**
**c/o Cabinet Patrice Vidon**
**Immeuble Germanium**
**80 avenue des Buttes de Coesmes**
**F-35700 Rennes (FR)**

COLLOOUE TVHD 87, Ottawa, 4-8 octobre 1987, vol.1, pages 6.2.2 - page 6.2.28;P. BERNARD et al.: "Analyse de structures de sous-échantillonnage spatio-temporel d'un signal TVHD en vue de sa transmission dans un canal MAC"

1984 INTERNATIONAL ZURICH SEMINAR ON DIGITAL COMMUNICATIONS, Zürich, 6-8 mars 1984, pages 49-56, IEEE, New York, US; J. DEWITTE et al.: Optimization of addressing bit rate in a multimode coder with motion compensation for broadcast television"

ICASSP 87 - PROCEEDINGS OF THE IEEE INTERNATIONAL CONFERENCE ON ACOUSTICS,SPEECH AND SIGNAL PROCESSING, Dallas, 6-9 avril 1987, vol. 2, pages 1051-1054,IEEE, New York, US; D.J. VAISEY et al.: "Variable block-size image coding"

**Description**

Le domaine de l'invention est celui de la compression de données, notamment de données d'assistance à la reconstitution d'une image électronique à partir d'un signal sous-échantillonné.

Le procédé, objet de l'invention, a été particulièrement conçu en vue de la compression de données d'images en télévision haute définition, pour transmettre ces images sur des canaux à bande passante réduite, par exemple selon la norme D2MAC Paquet. Mais il s'applique aussi dans tout système analysant une séquence d'images, ou d'ensembles de données, par exemple en visiophonie, en suivi de cibles, en transport d'image sur le RNIS, en imagerie biomédicale et autres...

Une image de télévision est définie par un certain nombre de paramètres qui représentent l'analyse spatiale et temporelle de cette image (en particulier le nombre d'images par seconde, le nombre de lignes par image et le nombre de points par ligne).

La bande passante, nécessaire pour transmettre une image de télévision haute définition, peut atteindre des valeurs de l'ordre de 100 MHz.

Ainsi, pour transmettre ces images sur des canaux à bande passante réduite (par exemple des canaux par satellite ayant une bande passante de l'ordre de 12 MHz), il est nécessaire d'appliquer à ces images des techniques de compression de données, afin d'obtenir une réduction du débit de transmission.

On connait plusieurs types de techniques de sous-échantillonnage d'images qui permettent une compression des données transmises. On connait par exemple le "procédé d'analyse de structures de sous-échantillonnage spatio-temporel d'un signal TVHD en vue de sa transmission dans un canal MAC", tel que décrit dans les actes du colloque TVHD 87 Ottawa 4-8 octobre 1987, tome 1, pages 6.2.1 et suivantes (P. Bernard, M.Veillard, CCETT). Dans ce procédé d'analyse connu, chaque image de la séquence est divisée en zones, et chaque zone subit systématiquement trois traitements parallèles dans trois filtres linéaires distincts. Chaque filtre assure un filtrage différent de sous-échantillonnage, correspondant respectivement à un filtrage préférentiel pour image fixe, pour image modérément mobile, et pour image très mobile. Les sorties des filtres sont ensuite comparées à la source originale, et un choix du meilleur filtrage est effectué pour déterminer lequel des signaux comprimés est effectivement transmis.

Les techniques de réduction de débit actuellement développées ont généralement pour objectif de comprimer l'image HD de façon à obtenir un débit de transmission correspondant à une image standard. Dans le cas d'un sous-échantillonnage dit "compatible", le signal d'image sous-échantillonnée transmis peut alors subir deux sorts distincts :
  - soit un affichage du signal sous-échantillonné sur téléviseur conventionnel ;
  - soit une reconstruction d'une image haute définition, à partir d'une part du signal sous-échantillonné, et d'autre part, de données d'assistance complémentaires.

La présente invention a pour objet le traitement de telles données d'assistance, de façon que ces données d'assistance elles-mêmes soient comprimées.

Le procédé suivant l'invention s'applique aussi bien aux techniques "compatibles" de sous-échantillonnage, qu'aux techniques non compatibles.

Du point de vue des techniques de sous-échantillonnage, le procédé de réduction de débit de l'invention s'applique aussi bien aux techniques de filtrage linéaire, mentionnées plus haut, qu'à d'autres types de techniques de sous-échantillonnage, comme la compensation de mouvement.

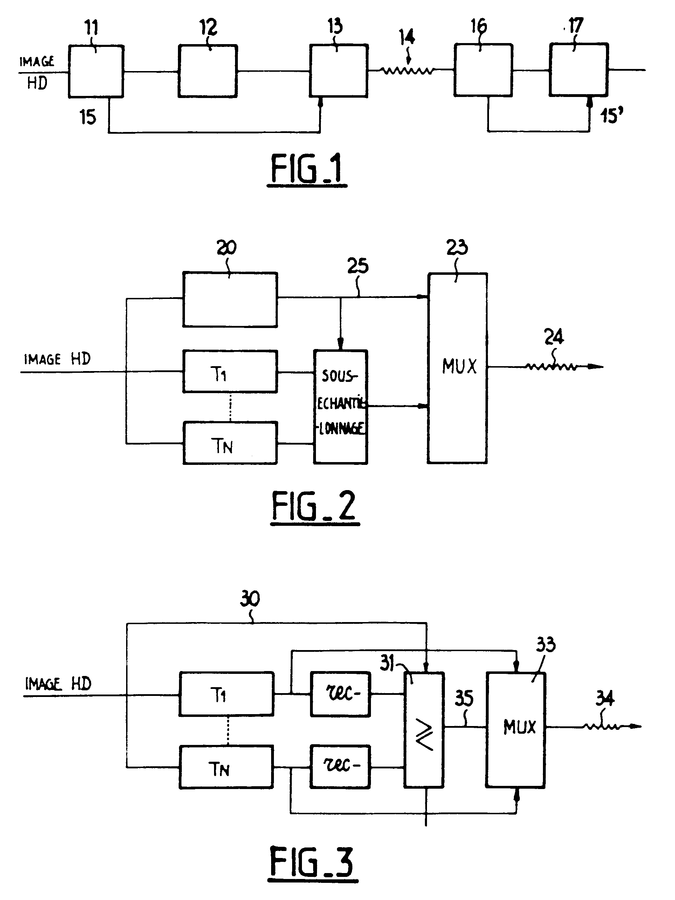

Toutefois, le procédé est plus particulièrement destiné aux techniques de sous-échantillonnage adaptatif dans lequel chaque point ou bloc de points est sous-échantillonné suivant un traitement préférentiel choisi parmi plusieurs traitements disponibles. Les données d'assistance sont dans ce cas constituées par une information associant à chaque point, ou bloc de points, une indication du traitement préférentiel qui lui a été appliqué. Des exemples de techniques de sous-échantillonnage adaptatif sont présentés en figures 1, 2 et 3. La figure 1 comprend une étape 11 de filtrage adaptatif suivie d'une étape 12 d'échantillonnage (rééchantillonnage ou sous-échantillonnage proprement dit), avant d'introduire le signal échantillonné dans le canal de transmission 14 via un multiplexeur 13. Dans ce mode de réalisation, les données d'assistance 15 sont les données de choix de traitement déterminées au moment du filtrage adaptatif 11. Ces données d'assistance 15 sont également envoyées dans le canal de transmission 14 à travers le multiplexeur 13 ; elles sont ensuite extraites, dans le récepteur, sous forme de données 15', par un démultiplexeur 16, afin de permettre la reconstruction 17 de l'image HD.

Les modes de réalisation de sous-échantillonnage adaptatif des figures 2 et 3 correspondent respectivement à un système à choix de traitement $(t_1 \cdots t_N)$, a priori (selon un critère de détection de mouvement 20 ; fig 2), et a posteriori (selon un critère de comparaison 31 avec l'image source HD 30 ; fig 3). Le principe de ces systèmes est décrit plus en détail notamment dans la demande de brevet française n° 87 17601 déposée le 16.12.87, sous le nom des mêmes déposants. Dans ces modes de réalisation, les données d'assistance 25, 35 sont également représentatives du traitement choisi, pour chaque point ou bloc de points de l'image, et sont envoyées dans le canal de transmission 24, 34 à travers un multiplexeur 23, 33.

On connait des techniques de réduction de débit applicables à ce type de données d'assistance.

On connait ainsi un système tel que décrit dans le document de brevet américain US-A-4605963(RCA). Ce document décrit une methode de filtrage consistant à ne transmettre qu'une partie du signal numérique d'image, accompagnée de données d'assistance à la reconstruction d'images. Pour chaque octet transmis, les données d'assistance identifient une combinaison standard d'octet transmis offant la configuration la plus proche. Le dispositif décrit dans le document cité consiste à diminuer le débit des données d'assistance en ne choisissant plus la combinaison la meilleure, mais seulement la première combinaison permettant une reconstruction suffisamment proche, déterminée par seuillage. Ceci permet d'associer la même donnée d'assistance, implicitement à plusieurs échantillons successifs.

Ce système s'applique toutefois à un principe très simple de sous-échantillonnage et de codage d'images sous-échantillonnées par transmission d'octets, et ne prévoit notamment pas la transmission d'une information de choix de traitement parmi plusieurs traitements disponibles.

En outre, la plupart des systèmes connus proposent de limiter le débit des données de choix de traitement en figeant la taille des blocs de points d'image à une dimension compatible avec la largeur du canal de transmission. Un nombre fixe de bits par bloc est alors transmis, qui indique au récepteur les modalités de reconstruction de l'image HD. Ce type de système présente clairement l'inconvénient de n'être pas adaptatif, et fournit donc des performances de qualité de reconstruction très variables suivant la nature et la configuration de l'image.

L'objectif de l'invention est notamment de pallier ces inconvénients des systèmes existants.

Plus précisément, un premier objectif de l'invention est de fournir un procédé de réduction de débit de données d'assistance à la reconstitution d'une image électronique à partir d'un signal sous-échantillonné, la réduction étant assurée selon un processus adaptatif d'optimisation de la compression de données.

Un autre objectif de l'invention est de fournir un tel procédé, dont le processus adaptatif s'effectue suivant une procédure d'exploration de l'image, et de décision de traitement pour chaque point ou bloc de points, optimisant le temps de traitement.

Un objectif complémentaire de l'invention est de fournir un tel processus de réduction de débit, présentant à la fois une performance accrue de réduction, et une meilleure fidélité à la configuration de l'image source HD. Ainsi, l'effort d'adaptabilité du procédé suivant l'invention, permet-il de "coller" davantage aux différents objets unitaires de l'image source, en permettant d'homogénéiser, pour chacun de ces objets unitaires, le traitement subi par l'ensemble des points qui le représentent sur l'image. Ceci est notamment réalisé grâce à l'utilisation d'un procédé de découpage de l'image par blocs de taille variable.

On connait des dispositifs de segmentation adaptative d'image, par exemple comme décrit dans le document EP-A-0248711; dans le document 1984 INTERNATIONAL ZURICH SEMINAR ON DIGITAL COMMUNICATIONS, 6-8 mars 1984, Zurich, pages 49-56, IEEE; J.DEWITTE et al. : "Optimization of addressing bit rate in a multimode coder with motion compensation for broadcast television"; et dans le document ICASSP 87 PROCEEDINGS - 1987 INTERNATIONAL CONFERENCE ON ACOUSTICS, SPEECH, and SIGNAL PROCESSING, 6-9 avril 1987, Dallas, Texas, vol. 2 des 4, pages 1051-1054, IEEE, New-York, US; D.J.VAISEY et al. : "Variable block-size image coding". Mais aucun d'entre eux ne mentionne ni ne suggère d'effectuer la segmentation adaptative en fonction d'une contrainte de débit de données d'assistance, représentatives d'une information de choix de traitement.

L'invention a également pour objectif de permettre de compléter la réduction de débit par une étape d'optimisation de la représentation de l'information réduite, sous la forme d'une quantification assurant une nouvelle compression du signal transmis. Le processus de représentation consiste à substituer un identifiant d'état de l'information, à la description de cet état d'information, puis à retrouver au récepteur cette description dans un dictionnaire adressé par l'identifiant reçu, et ne se traduit donc pas par une perte d'information.

Un autre objectif de l'invention est de fournir un procédé de réduction de débit compatible avec un processus de filtrage d'élimination de points ou blocs de points isolés. La notion de zone isolée signifie que la zone en question est atypique et minoritaire dans son environnement du point de vue du traitement qui lui a été associé comme étant optimal.

Un des objectifs essentiels de l'invention est également de fournir un procédé de réduction de débit de données d'assistance applicable à un traitement de sous-échantillonnage de séquences d'images en TVHD, de façon à permettre la transmission des signaux sous-échantillonnés d'image à travers un canal de type MAC, notamment en limitant le débit des signaux sous-échantillonnés de données d'assistance à une valeur maximale de 1 Mbits/s.

Ces objectifs ainsi que d'autos qui apparaîtront par la suite sont atteints à l'aide d'un procédé tel que revendiqué dans la revendication 1.

D'autre part, dans un mode de réalisation préférentiel de l'invention, ladite étape de choix du traitement optimal, pour les éléments d'image à traitements indifférents, consiste à réaliser un processus de codage hiérarchique sur des blocs d'images de ladite image, lesdits blocs d'images étant constitués de n.m éléments d'images,

ledit processus de codage hiérarchique consistant à tenter d'abord de sélectionner un traitement représentatif unique pour tous les éléments d'images dudit bloc d'images, en explorant l'ensemble des traitements acceptables par les éléments d'images à traitements indifférents, puis le cas échéant à diviser itérativement ledit bloc jusqu'à y dégager des sous-blocs à traitement représentatif unique.

Selon l'invention, il est également possible de réaliser sur l'image une opération de filtrage d'élimination d'éléments d'image isolés, ledit filtrage consistant à balayer l'image sous-échantillonnée avec une fenêtre mobile de filtrage de taille n x n éléments d'images, et de préférence 3 x 3 éléments d'images, et à modifier le traitement de sous-échantillonnage associé à au moins un élément d'image central pour chaque position sur l'image de la fenêtre mobile, au cas ou le traitement associé audit élément d'image central est différent d'un traitement majoritaire et/ou d'un traitement moyen associé aux autres éléments d'images à l'intérieur de ladite fenêtre.

De façon avantageuse, ladite opération de filtrage d'élimination des blocs isolés est effectuée avant l'opération de forçage du choix de traitement, pour les blocs à traitements indifférents.

D'autres caractéristiques et avantages de l'invention apparaîtront à la lecture suivante de la description de modes de réalisation préférentiels, donnés à titre illustratif, et des dessins annexés :

- la figure 1 représente un système connu de sous-échantillonnage d'une image HD par filtrage adaptatif ;
- les figures 2 et 3 représentent respectivement des systèmes connus de sous-échantillonnage d'images HD selon un processus de sélection a priori, et a posteriori respectivement, de plusieurs traitements de filtrage/sous-échantillonnage $t_1 ... t_N$ ;
- la figure 4 illustre la séquence d'étapes d'un mode de réalisation préférentiel du procédé de réduction de débit suivant l'invention ;
- les figures 5A, 5B illustrent la mise en oeuvre d'un processus de codage hiérarchique, par "quadtree" pour l'étape de choix du traitement optimal pour les éléments d'images à traitements indifférents ;
- la figure 6 schématise la mise en oeuvre d'une opération de filtrage d'élimination d'éléments d'images isolées, dans le cas simple de deux traitements disponibles ;
- les figures 7, 8, 9A, 9B illustrent un mode de réalisation avantageux pour la mise en oeuvre d'un fonctionnement séquentiel de l'étape de détermination des éléments indifférents, dans le cas d'un système de sous-échantillonnage à trois traitements disponibles ;
- les figures 10A, 10B, 11, 12 illustrent un mode de réalisation avantageux pour la mise en oeuvre d'un fonctionnement séquentiel de l'étape de détermination des choix de traitement, pour les éléments d'images à traitements indifférents, compatible avec le mode de réalisation des figures 7 à 9B.

Les différents aspects du mode de réalisation décrit ci-après, correspondent pour l'essentiel à la mise en oeuvre du procédé de réduction de débit des données d'assistance, dans un système de sous-échantillonnage d'images HD, à trois voies de traitement disponibles.

Bien entendu, le procédé suivant l'invention ne se limite pas à une application de ce type, et l'on peut, sans difficulté, envisager d'appliquer l'invention à des systèmes de sous-échantillonnage présentant un nombre différent de voies de traitement.

Les trois traitements disponibles sont par exemple des traitements de filtrage linéaire. Dans un tel cas, les données d'assistance peuvent avantageusement être constituées par de simples identifiants des traitements, associés à chaque point ou bloc de points devenu homogène après application du procédé suivant l'invention. On notera par exemple ces identifiants, pour chaque élément d'image homogène, sous la forme $f_1$, $f_2$, $f_3$, dans lesquels $f_1$, $f_2$ et $f_3$ représentent chacun l'un des 3 traitements disponibles, sous forme d'un bit d'information susceptible de prendre la valeur 0 ou 1 (voir plus loin).

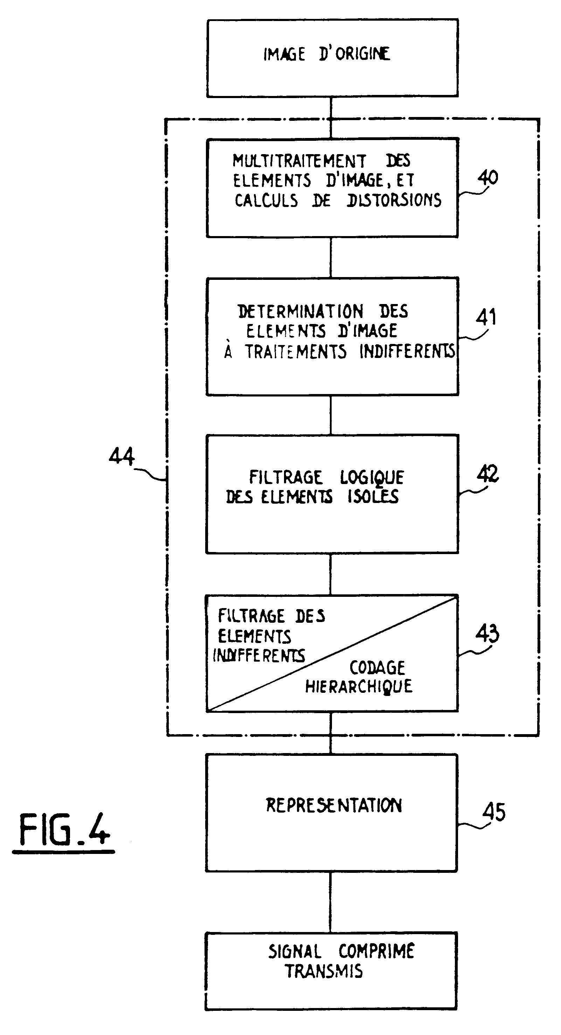

La figure 4 représente la séquence des étapes du procédé suivant l'invention, à savoir :

- le procédé est initialisé à partir des valeurs de distorsion associées aux différents traitements disponibles, effectués en parallèle, pour chaque élément d'image 40 ;
- on détermine ensuite, parmi l'ensemble des éléments d'images, ceux qui peuvent être considérés comme acceptant indifféremment au moins deux traitements distincts 41 ;
- le cas échéant, on réalise un filtrage logique 42 d'élimination des éléments d'images isolées dans l'image ;

- on réalise le filtrage 43 de sélection du traitement final associé aux éléments indifférents, en liaison avec une procédure de codage hiérarchique permettant l'optimisation de la réduction de débit ;
- on effectue enfin la représentation 45 des éléments d'images, aux fins d'envoi des identifiants correspondants.

Les étapes 40 à 43 correspondent à l'opération 44 de réduction de débit proprement dit, précédant l'étape de représentation 45.

Pour le mode de réalisation décrit ici, à l'étape 40, chacun des trois traitements disponibles (zone fixe, mouvement moyen, mouvement rapide) est effectué, en parallèle, sur l'image HD d'origine. Ces traitements consistent essentiellement chacun, en un préfiltrage de l'image, un sous-échantillonnage adapté au mouvement de chaque voie, et une reconstruction de l'image.

Le choix du traitement est alors fait sur les images reconstruites au codeur, par comparaison à l'image d'origine.

Ce choix est effectué, par exemple, sur des élément d'image constitués chacun d'un bloc de 4 points par 4 lignes dans chacune des trames de l'image haute définition. Pour chacun des traitements est calculé le maximum de l'erreur de reconstruction sur le bloc 4 x 4 (distorsion entre l'image-source et l'image sous-échantillonnée, avant ou après reconstruction). Plusieurs calculs connus de distorsion sur un bloc peuvent être utilisés, par exemple du type de la DFD (Walker et Rao). Le traitement choisi est celui qui minimise cette erreur.

L'étape 41 a pour objet de sélectionner des éléments d'image à traitements indifférents.

Dans une application HDMAC, envoyer une information de choix de traitement pour chaque bloc 4 x 4 entraînerait un débit trop important par rapport à celui autorisé.

Par ailleurs, un certain nombre de blocs dans l'image (en particulier dans les zones uniformes) peuvent être traités sans dommage selon l'un ou l'autre des trois traitements.

Afin de diminuer le débit il a donc été défini des blocs "indifférents" quant au traitement qu'ils subiront. Ceux-ci sont des blocs tels que la différence entre les maxima de l'erreur de reconstruction selon 2 voies de traitement différentes est inférieure à un certain seuil (fixé par exemple de façon empirique à environ 5 unités sur l'échelle 0-255 à partir des envois réalisés). Ces blocs seront a posteriori choisis comme étant traités selon l'une ou l'autre des voies, de façon à réduire le débit de l'information de choix de traitement.

Il est à remarquer que la modification des blocs indifférents en blocs non indifférents sera très liée à la méthode de codage (représentation) de l'information utilisée.

Pour résumer, sont donc définis dans l'image :
- des blocs traités selon la voie "zone fixe" (blocs de type B1)
- des blocs traités selon la voie "mouvement moyen" (blocs de type B2)
- des blocs traités selon la voie "mouvement rapide" (blocs de type B3)
- des blocs indifférents entre la voie "zone fixe" et la voie "mouvement moyen" (blocs de type I1)
- des blocs indifférents entre la voie "mouvement moyen" et "mouvement rapide" (blocs de type I2).

Il n'y a pas de blocs indifférents entre les voies "zone fixe" et "mouvement rapide".

L'étape 42 correspond à un filtrage logique des éléments (blocs) isolés. Un nombre important de décisions (et donc de blocs à coder) ne correspondent pas à une information de mouvement significative (les blocs isolés en particulier) et grèvent de façon importante le débit. Ces blocs peuvent donc être éliminés par un filtrage médian.

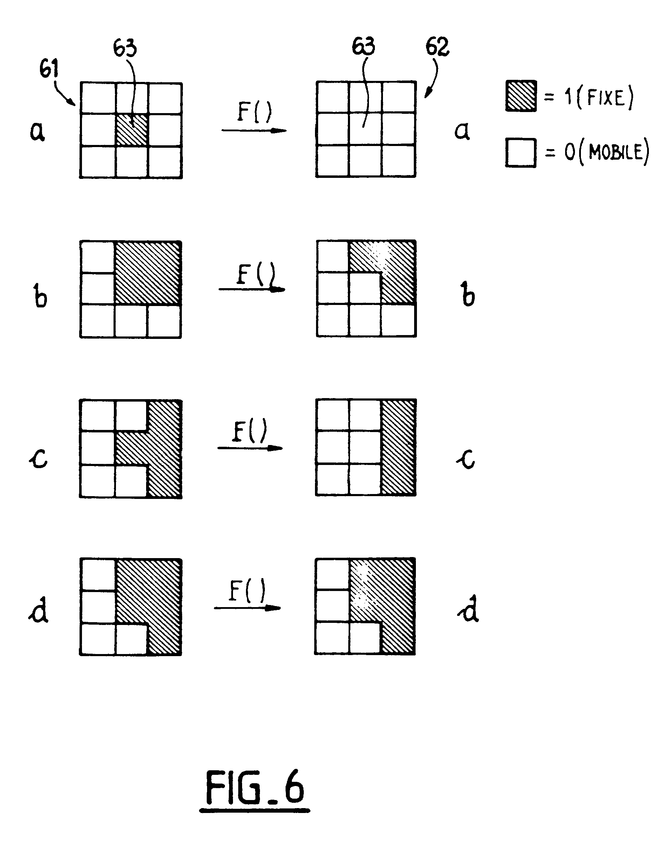

Comme schématisé en figure 6, le support du filtre 61 est de 3 blocs horizontalement par 3 blocs verticalement.

Dans le mode de réalisation de la figure 6, on a représenté un cas de filtrage de blocs isolés appliqué à un système multitraitement à seulement deux traitements disponibles. Le premier traitement 1 est schématisé par une case noire, représentant un bloc pour lequel le traitement choisi par minimisation de la distorsion de sous-échantillonnage est, par exemple, le filtrage pour "zone fixe". Les blocs blancs correspondent donc à un traitement préférentiel selon une voie "zone mobile". Dans le mode de réalisation représenté, la fonction de filtrage F() consiste à considérer que le bloc central 63 du filtre 61 est isolé lorsqu'il a moins de 4 voisins de même nature (fixe ou mobile). Dans ce cas, un bloc fixe isolé devient un bloc mobile 61A, 61B, 61C, ou réciproquement. Le cas 61D correspond à un maintien de la nature fixe du bloc central.

Dans le cas d'une application de ce principe de filtrage à un système multitraitement à trois traitements disponibles, un mode de réalisation (non représenté) peut consister en ce que l'ensemble des traitements sur ces neuf blocs est classé dans l'ordre suivant : "zone fixe" B1, "bloc indifférent" I1, "mouvement moyen" B2, "bloc indifférent" I2, "mouvement rapide" B3. La valeur médiane (c.a.d. la cinquième des neuf valeurs classées) est alors choisie comme nouvelle valeur du bloc central.

6

Ce filtre a pour effet d'éliminer les blocs isolés (c.a.d. ceux dont l'information de choix diffère de celle des blocs voisins) en la remplaçant par l'information localement majoritaire. Il a en particulier l'effet de transformer des blocs isolés de mouvement déterminé ("zone fixe", "mouvement moyen", "mouvement rapide") en blocs indifférents dans les zones uniformes de l'image.

L'étape 43 de la figure 4 correspond au filtrage des blocs indifférents, c'est-à-dire à la détermination finale du traitement affecté à ces blocs.

De façon à diminuer au maximum le débit de l'information de choix qui est à transmettre, le filtrage des blocs indifférents doit être lié à la méthode de codage utilisée, soit dans le cas présent le codage hiérarchique.

Le principe du codage hiérarchique est de coder des blocs d'information homogènes de taille variable (par exemple de 4 points par 4 lignes jusqu'à 16 points par 16 lignes), le nombre de bits décrivant un bloc 16 x 16 étant inférieur à celui décrivant un bloc 4 x 4. Il est donc important lors du filtrage des blocs indifférents de créer le plus grand nombre possible de blocs de taille 16 x 16 possédant une information de mouvement homogène. Pour cela le filtre logique qui élimine les blocs indifférents aura un support de taille variable de 16 x 16 jusqu'à 4 x 4.

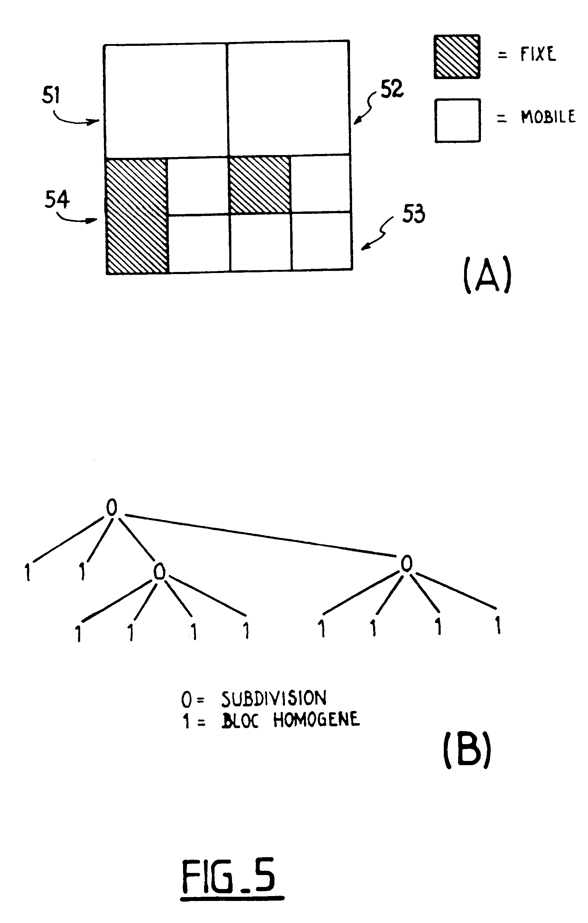

Les figures 5a, 5b illustrent un mode avantageux de mise en oeuvre du codage hiérarchique, sous forme de "quadtree", dans le cas d'un système multitraitement à deux traitements disponibles (fixe, mobile).

Le bloc 50 de taille 16 x 16 étant hétérogène, il est décomposé en quatre sous-blocs 8 x 8 (51, 52, 53, 54). Les sous-blocs 51, 52 sont homogènes et peuvent donc être codés à ce niveau. En revanche, les sous-blocs 53, 54 sont hétérogènes : ils doivent alors tous deux être décomposés en blocs élémentaires 4 x 4.

L'arbre de la figure 5b illustre la décomposition : on constate que la zone 16 x 16 peut être décrite par 10 bits (2 blocs 8 x 8 et 8 blocs 4 x 4), au lieu de 16 bits si l'on avait voulu décrire d'emblée chaque bloc 4 x 4 sur l'ensemble de la zone 16 x 16. Dans le cas d'un système multitraitement à trois traitements disponibles, la méthode de filtrage est la suivante :

1- support initial de 16 x 16 (soit le regroupement de 16 blocs de taille 4 x 4)

2- si l'information de choix est homogène (tous les blocs ont une information de mouvement identique) et significative ("zone fixe", "mouvement moyen" ou "mouvement rapide") : alors fin de filtrage des blocs dans le support considéré.

3- si l'information de choix est homogène mais indifférente : les blocs de type I1 sont modifiés en blocs de "mouvement moyen" et les blocs de type I2 sont modifiées en blocs de "mouvement rapide"

4- si l'information de mouvement est hétérogène mais cohérente (blocs indifférents et blocs de mouvement correspondant) :

a) blocs de type "zone fixe" B1 et indifférent I1 : les blocs de type I1 sont modifiés en type B1

b) blocs de type "mouvement moyen" B2 et indifférent I1 ou I2 : les blocs de type indifférent sont modifiés en type B2

c) blocs de type "mouvement rapide" B3 et indifférent I2 : les blocs de type indifférent sont modifiés en type B3

5- si l'information de choix est hétérogène et incohérente (tous les autres cas) : le support du filtre est divisé par 4 et il devient donc un support de 8 points par 8 lignes. Le processus est alors itéré à partir de l'étape 2 (avec éventuellement une nouvelle division par 4 du support du filtre)

Il est à noter que lorsque seuls des blocs indifférents sont trouvés dans les limites du support du filtre, le choix est avantageusement modifié en favorisant le "mouvement moyen" par rapport aux "zones fixes" et le "mouvement rapide" par rapport au "mouvement moyen" afin de privilégier dans les cas critiques un effet de flou moins gênant que d'autres artefacts possibles.

On notera également qu'il est préférable d'effectuer le filtre médian avant le filtrage des zones indifférentes pour une raison principale : un bloc 4 x 4 d'information de choix non indifférent dans une zone indifférente est éliminé alors que l'inversion des opérations ferait augmenter sa taille. Cela permet d'éliminer de petites zones de choix non significatif au lieu de leur donner trop d'importance.

Le procédé de réduction de débit est parfaitement adaptable à toutes sortes de technique de gestion de la compression des données principales d'image, notamment avec des techniques de saut d'image, de saut de trame et analogues. Ainsi, de façon à diminuer les commutations temporelles de choix de traitement qui sont visuellement très gênantes, un forçage temporel peut être effectué sur les décisions de choix de traitement, ce qui permet également, le cas échéant, de diminuer le débit.

A titre d'exemple, un forçage temporel réalisé sur un jeu de 4 trames ferait passer d'une information de choix transmise à 50 Hz à une information de choix transmise à 12,5 Hz.

Par ailleurs, il est à remarquer qu'une information de choix stable sur 4 trames est indispensable pour obtenir une bonne reconstruction des zones fixes de l'image.

De façon avantageuse, le forçage utilisé pour un système multitraitement à trois traitements disponibles est donc le suivant : l'information de choix sur quatre trames consécutives est considérée pour l'ensemble des blocs élémentaires de 4 points par 4 lignes. Si sur une des 4 trames, le bloc est traité selon le mode "mouvement rapide", il l'est sur les 4 trames. Sinon, si sur une trame, le bloc est traité selon le mode "mouvement moyen", il l'est sur les 4 trames. Enfin, dans le dernier cas, il est traité en "zone fixe" sur les 4 trames.

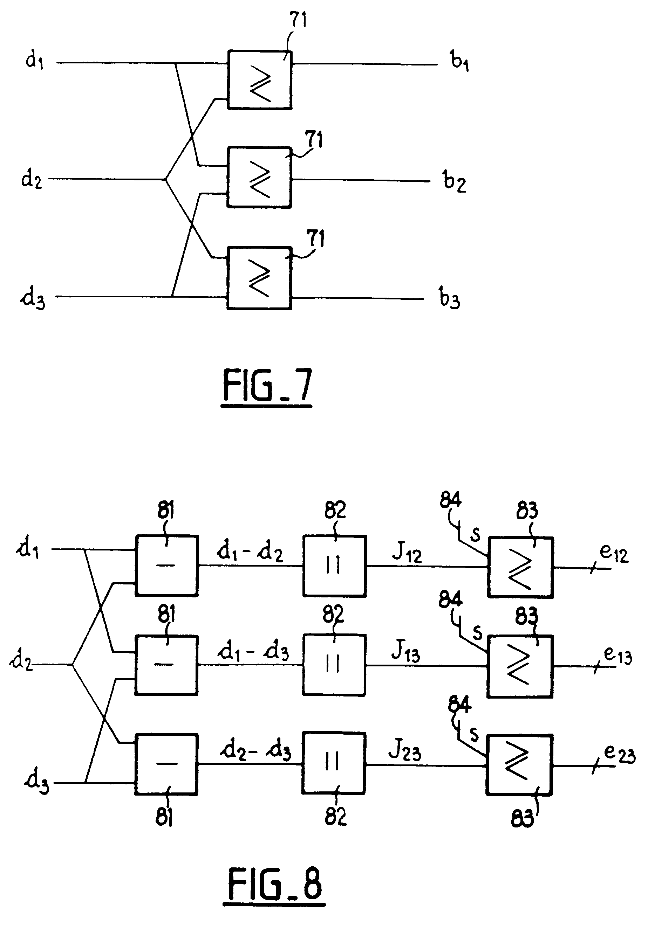

Les figures 7 à 12 correspondent à un mode de réalisation avantageux d'un module en fonctionnement séquentiel pour la mise en oeuvre du procédé de réduction de débit de données d'assistance suivant l'invention.

Ce module correspond à un système multitraitement à trois chaînes de traitement disponibles.

Les éléments d'images sont des blocs de quatre points par quatre lignes dans la trame.

L'étape 45 de représentation (figure 4) est réalisée par "quadtree" sur des blocs de 4 x 4 éléments d'images (16 x 16 points d'images).

Ce module préférentiel comporte les sous-modules suivants :

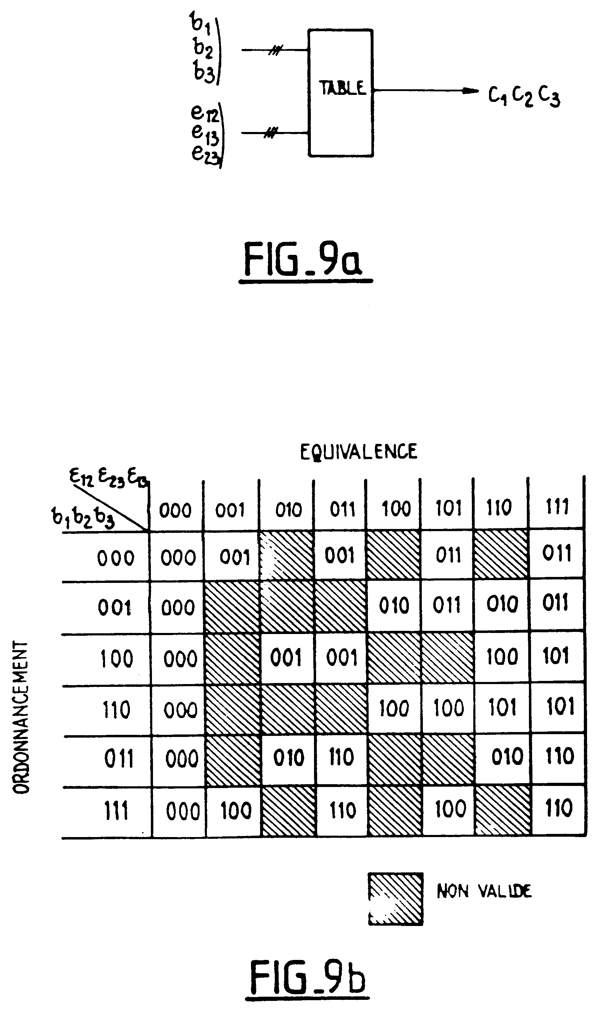

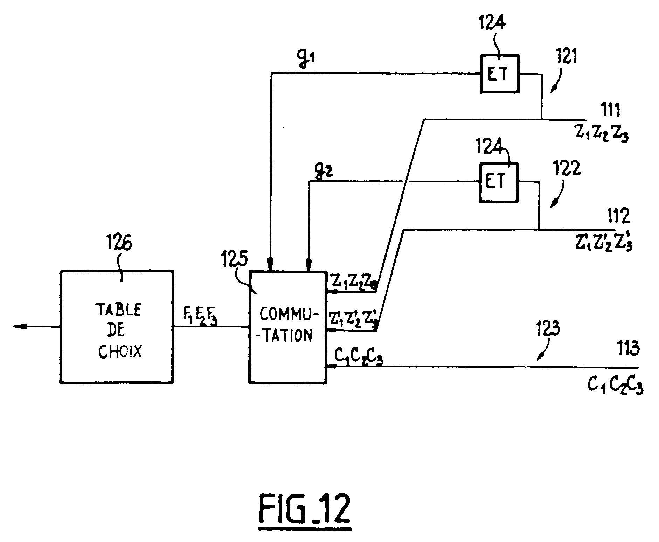

- un premier sous-système 41 de détermination des éléments d'images à traitements indifférents, comprenant :
  . un sous-module de calcul de bits de classement des trois traitements, pour chaque élément d'image (figure 7),
  . un sous-module de calcul de bits d'équivalence de traitement, entre les trois traitements disponibles pris deux à deux, pour chaque élément d'image (figure 8);
  . une table de calcul de bits d'indifférence de traitement (figure 9b) à partir des bits de classement et des bits d'équivalence de traitement,
- un second sous-système 43 de filtrage des éléments indifférents, avec codage hiérarchique, comprenant les deux sous-modules suivants :
  . un sous-module de calcul de trois séries de bits d'homogénéité de traitement, sur les blocs 4 x 4 éléments d'images, 2 x 2 éléments d'images, et 1 x 1 élément d'image, pour la mise en oeuvre du codage hiérarchique (figure 11),
  . un sous-module de calcul des bits de traitement final, en fonction des bits d'homogénéité de traitement, à chaque niveau du codage hiérarchique (figure 12).

Le module de la figure 7 permet de calculer les bits de classement b1 b2 b3, à partir des distorsions d1 d2 d3 introduites respectivement par chaque traitement par rapport à l'image d'origine.

La salve de bits b1 b2 b3, en sortie du module de la figure 7, fournit un ordre de classement des traitements sur trois bits b1 b2 b3 selon l'algorithme suivant :

si $d_1 \leq d_2$ $b_1$ = 0 sinon $b_1$ = 1
si $d_1 \leq d_3$ $b_2$ = 0 sinon $b_2$ = 1
si $d_2 \leq d_3$ $b_3$ = 0 sinon $b_3$ = 1

La méthode de calcul des valeurs d'entrée de distorsion $d_1...d_N$ n'est pas une caractéristique limitative de l'invention ; il pourra par exemple s'agir de l'écart de luminance DFD.

Pour N valeurs de distorsion di en entrée, le sous-module de la figure 7 fournit N.(N - 1)/2 valeurs de bits de classement $b_i$, en sortie d'autant de circuits comparateurs 71.

Le sous module de la figure 8 schématise l'obtention de bits d'équivalence de traitements $e_{ij}$, à partir des valeurs de distorsion $d_1...d_N$. De la même manière que pour les bits de classement $b_i$ du sous-module de la figure 7, les bits d'équivalence $e_{ij}$ sont calculés pour les N.(N - 1)/2 couples de distorsion que l'on peut former à partir des N distorsions $d_i$ en valeurs d'entrée.

Le sous-module de la figure 8 comprend successivement un jeu de circuits soustracteurs 81 permettant de calculer des valeurs de distorsions différentielles ($d_1$ - $d_2$, $d_1$ - $d_3$, ...), puis un jeu de circuits 82 d'obtention de la valeur absolue des distorsions différentielles. Les écarts entre distorsions ainsi obtenus sont introduits enfin dans un jeu de circuits comparateurs 83, qui admet également en entrée une valeur de seuil 84. Les bits $e_{ij}$, en sortie du module, vérifient l'algorithme suivant :

$e_{ij}$ = 0, si $J_{ij} \leq S$ ($J_{ij}$ = $|d_i - d_j|$) : les traitements $T_i$ et $T_j$ sont équivalents pour l'élément d'image considéré.

$e_{ij}$ = 1 sinon

La figure 9a schématise la chaîne de calcul des bits de pertinence $c_1 c_2 c_3$ de traitement, à partir des valeurs d'entrée constituées d'une part, par les bits d'ordonnancement b1 b2 b3, et d'autre part, par les bits

d'équivalence $e_{12}$ $e_{13}$ $e_{23}$.

Chacun des bits $c_i$ indique si le traitement $T_i$ correspondant est pertinent et acceptable pour l'élément d'image courant. La salve de bits $c_1 c_2 c_3$, permet donc de savoir si l'élément d'image est indifférent entre plusieurs des traitements disponibles, suivant l'algorithme suivant :

si $c_i$ = 0, l'élément d'image peut être traité par le traitement $T_i$

si $c_i$ = 0 et $C_j$ = 0, l'élément d'image est infifférent entre les traitements $T_i$ et $T_j$

si $c_i$ = 0 et $c_j$ = 1 pour j = i ; alors l'élément d'image est non indifférent. Son traitement associé est le traitement $T_i$.

La table de la figure 9B fournit la correspondance entre les valeurs d'entrée et les valeurs de sortie du sous-module de la figure 9A. Les cases noircies de la table correspondent à des situations logiquement impossibles.

On vérifiera que la valeur de chaque bit de pertinence est égale à 0 (traitement acceptable) lorsque le traitement associé satisfait à la fois à une condition de distorsion minimale par rapport aux autres traitements disponibles non indifférents (bits d'ordonnancement), et à une condition d'écart de distorsions seuillées avec chacun des autres traitements indifférents (bits d'équivalence).

Les bits d'équivalence sont ensuite introduits dans le module 43 de filtrage des éléments indifférents, avec opération de codage hiérarchique. Le cas échéant, les éléments d'images ont préalablement subi un filtrage logique d'élimination d'éléments isolés (42).

L'opération de codage hiérarchique suppose que l'on mémorise les informations relatives au support du filtre, soit des blocs de 4 x 4 éléments d'images.

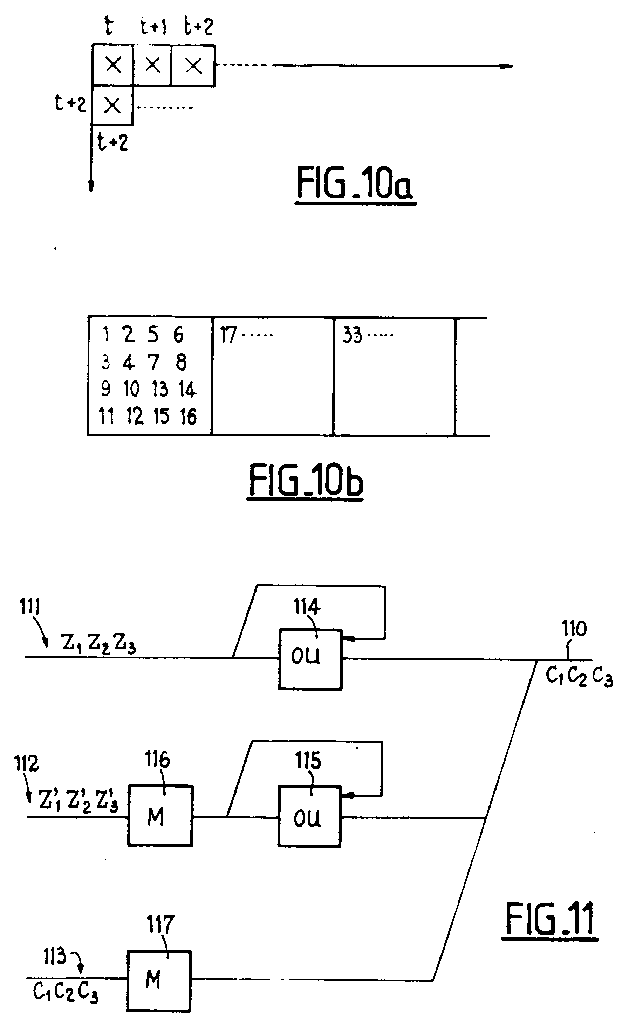

La figure 10A illustre l'ordre d'exploration des éléments d'images dans l'image source. t + 2 correspond à un retard d'une ligne d'élément d'image.

Pour l'opération de filtrage des éléments indifférents, et donc de forçage du traitement final choisi pour chaque élément d'image à traitements indifférents, la relecture de la mémoire s'effectue dans l'ordre indiqué en figure 10B, sur des blocs de 4 x 4 éléments. La mémoire associée contient l'information de pertinence de traitement pour chaque élément d'image, à savoir les salves de bits de pertinence $c_1 c_2 c_3$.

Les salves $c_1 c_2 c_3$, peuvent en effet prendre deux types de valeurs :

- des valeurs avec un seul traitement pertinent, qui sera donc le traitement final choisi ($c_1 c_2 c_3$ = 011, 101, 110);
- des valeurs avec plusieurs traitements pertinents, entre lesquels un traitement final doit être choisi par filtrage ($c_1 c_2 c_3$ = 000, 001, 010, 100.

La figure 11 représente le sous-module d'exploration en parallèle, dans trois branches 111, 112, 113, de la possibilité de regroupement des éléments d'images en blocs homogènes 4 x 4, 2 x 2, ou simplement 1 x 1 respectivement.

Dans la branche 111, les salves $c_1 c_2 c_3$ fournissent sur 16 coups d'horloge, une salve de valeurs $z_1 z_2 z_3$ représentative de l'homogénéité du bloc 4 x 4 courant, par l'intermédiaire du circuit OU 114.

Chacun des bits $Z_i$ est calculé sous la forme :

$$z_i = U(C_i)_{t = 1 \text{ à } 16}.$$

Ainsi, si Zi = 0, l'ensemble des éléments d'images du bloc 4 x 4 peut être traité par le traitement $T_i$.

La branche 112 réalise un calcul similaire, à l'aide du circuit OU 115, sur chaque bloc 2 x 2 courant.

Chacun des bits de la salve $z'_1 z'_2 z'_3$ résulte de l'opération logique :

$$z'_i = U(C_i)_{t = 1 \text{ à } 4} ;$$

Ainsi, si $z'_i$ = 0, l'ensemble des éléments du bloc 2 x 2 courant peut être traité par le traitement $T_i$.

Chacune des salves $z'_1 z'_2 z'_3$ d'un même bloc 4 x 4 est mémorisée dans une mémoire 116 de quatre valeurs.

La branche 113 mémorise dans une mémoire de 16 valeurs 117, les salves de bits de pertinence $c_1 c_2 c_3$ associées à chacun des éléments d'images du bloc 4 x 4 courant.

L'exploitation des trois séries de salves 111, 112, 113 issues du sous-module de la figure 11, est effectuée dans le sous-module de la figure 12 assurant la décision sur les bits de traitement final $f_1 f_2 f_3$, pour le bloc ou l'élément d'image courants.

La salve $f_1 f_2 f_3$, est sélectionnée, par le circuit de commutation 125, à partir des trois salves d'entrée $z_1 z_2 z_3$, $z'_1 z'_2 z'_3$, $c_1 c_2 c_3$. Le critère de sélection est constitué par les deux informations de sélection $g_1$, $g_2$ définies comme suit :

$g_1 = z_1.z_2.z_3$

$g_2 = z'_1.z'_2.z'_3.$

Ces deux informations de sélection sont obtenues au moyen du circuit ET 124 placé sur chacune des deux branches 121, 122 en entrée du sous-module.

Lorsque $g_1$ ou $g_2$ est nul, cela signifie qu'il existe un traitement commun à tous les éléments du bloc courant 4 x 4 ou 2 x 2 respectivement.

La commutation effectuée par le circuit 125 fonctionne alors suivant l'algorithme suivant :

si $g_1 = 0$, en sortie de commutation, on a

$f_1 f_2 f_3 = z_1 z_2 z_3$

si $g_1 = 1$ et $g_2 = 0$, en sortie de commutation, on a :

$f_1 f_2 f_3 = z'_1 z'_2 z'_3$

si $g_1 = 1$ et $g_2 = 1$ en sortie de commutation, on a :

$f_1 f_2 f_3 = c_1 c_2 c_3$

La table de choix 126 attribue enfin le choix de traitement aux éléments d'images suivant la table I suivante :

<u>TABLE I</u>

| $f_0 f_1 f_2$ | SORTIE | | |
|---|---|---|---|
| 011 | | 011 | --> (traitement 1) |
| 101 | | 101 | --> (traitement 2) |
| 110 | | 110 | --> (traitement 3) |
| 001 | 011 | | |
| | ou 101 | | |
| 010 | 011 | | |
| | ou 110 | | |
| 100 | 101 | | |
| | ou 110 | | |
| 000 | 011 | | |
| | ou 101 | | |
| | ou 110 | | |

On a testé le procédé suivant l'invention dans les conditions suivantes :

La méthode de codage utilisée pour réduire le débit de l'information de choix est le codage hiérarchique, appliqué à des blocs dont la taille varie entre 16 points par 16 lignes et 4 points par 4 lignes (l'élément d'image est donc de taille 4 x 4 points).

le codage hiérarchique décrit donc l'image en un certain nombre de blocs de tailles variables (4 x 4 jusqu'à 16 x 16), chacun des blocs contenant une information de choix de traitement homogène. Comme il y a trois traitements possibles, cette information de choix est codée ici sur 2 bits pour chaque bloc.

Le débit total est donc décomposé en deux : une part du débit est consacré à la segmentation de l'image, l'autre à l'information de choix à proprement parler.

Sur les séquences testées, la répartition est environ de 1/3 pour la segmentation contre 2/3 pour le choix.

Dans le cas de la chaîne à trois voies, l'information de choix de traitement possède les caractéristiques suivantes :

- cette information est transmise à 12,5 Hz (4 trames consécutives possèdent la même information de choix de traitement).
- elle est codée par un algorithme hiérarchique (quadtree) qui décompose l'image en blocs de taille variable (segmentation de l'image). Pour chacun des blocs est transmis une information de choix (sur 2 bits).
- le débit obtenu reste inférieur à 160 kbit/s pour l'image haute défintion.

## Revendications

1. Procédé de réallocation de choix de traitement de sous-échantillonnage, sur critère de réduction de débit d'une séquence de données d'assistance à la reconstitution d'une image électronique sous-échantillonnée, notamment une séquence des informations de choix de traitement de sous-échantillonnage associées à chaque élément d'image d'une image électronique sous-échantillonnée,

le traitement de sous-échantillonnage utilisé pour chaque élément d'image consistant à retenir un traitement optimal choisi parmi au moins trois traitements disponibles testés en parallèle, l'efficacité de chaque traitement étant mesurée par un critère de distorsion du signal traité par rapport au signal source,

procédé caractérisé en ce que,

- on détermine (41), au sein de l'image ou de blocs de l'image, des éléments d'images susceptibles d'accepter indifféremment au moins deux traitements distincts de sous-échantillonnage parmi lesdits au moins trois traitements disponibles , ladite étape (41) de sélection des éléments d'images à traitements indifférents consistant à rechercher, pour chaque élément d'image, s'il existe un ensemble de traitements indifférents, parmi lesdits au moins trois traitements disponibles, tels que chacun des traitements appartenant audit ensemble de traitements indifférents satisfait à la fois à une condition de distorsion minimale par rapport au autres traitements disponibles non indifférents, et à une condition d'écart de distorsion seuillé avec chacun des autres traitements indifférents ;
- on choisit (43) d'associer à chacun desdits éléments d'images à traitements indifférents, celui desdits traitements indifférents permettant une réduction optimale de débit des données d'assistance.

2. Procédé selon la revendication 1, caractérisé en ce que ladite étape (41) de sélection des éléments d'images à traitements indifférents est mise en oeuvre selon un processus consistant à :
- ordonner lesdits traitements disponibles par ordre de distorsion croissante du signal traité par rapport au signal source;
- déterminer parmi l'ensemble des couples de traitement que l'on peut former parmi lesdits traitements disponibles, les couples dont l'écart de distorsion, en valeur absolue, est inférieur à un seuil acceptable donné;
- déterminer parmi lesdits traitements disponibles, les traitements pertinents définis comme étant les premiers traitements dans l'ordre de distorsion croissant qui présentent deux à deux un écart de distorsion inférieur audit seuil acceptable donné;
- lesdits traitements pertinents étant dits indifférents lorsqu'ils sont au moins au nombre de deux.

3. Procédé selon la revendication 1, caractérisé en ce que ladite étape (41) de sélection des éléments d'image à traitements indifférents consiste à associer, à chacun des couples de traitement que l'on peut former parmi l'ensemble des traitements disponibles pour l'élément d'image :

- un bit d'ordonnancement (bi), ledit bit d'ordonnancement associé à chacun desdits couples de traitement disponibles prenant une première valeur lorsque le premier traitement du couple conduit à une distorsion inférieure au second traitement, et une seconde valeur dans le cas contraire;
- un bit d'équivalence de traitement (eij), ledit bit d'équivalence associé à chacun desdits couples de traitement disponibles prenant une première valeur lorsque l'écart de distorsion, en valeur absolue, entre les deux traitements du couple est inférieur à un seuil acceptable donné, et une seconde valeur dans le cas contraire;

et en ce qu'on lit ensuite, dans une table (90), un bit (ci) de pertinence de traitement associé à chaque traitement, en fonction de la combinaison des valeurs des bits d'ordonnancement et des bits d'équivalence particuliers audit élément d'image.

4. Procédé selon la revendication 1, caractérisé en ce que ladite étape (43) de choix du traitement optimal, pour les éléments d'image à traitements indifférents, consiste à réaliser un processus de codage hiérarchique sur des blocs d'images de ladite image, lesdits blocs d'images étant constitués de n.m éléments d'images, ledit processus de codage hiérarchique consistant à tenter d'abord de sélectionner un traitement représentatif unique pour tous les éléments d'images dudit bloc d'images, en explorant l'ensemble des traitements acceptables par les éléments d'images à traitements indifférents, puis le cas échéant à diviser itérativement ledit bloc jusqu'à y dégager des sous-blocs à traitement représentatif unique.

5. Procédé selon la revendication 4, caractérisé en ce qu'on définit trois traitements de sous-échantillonnage disponibles B1, B2, B3 admettant des types distincts d'éléments d'image à traitements indifférents I1, I2,
   et en ce qu'on applique ledit processus de codage hiérarchique sur un bloc initial de n x n éléments d'images, selon les étapes suivantes :
   - si le traitement associé à tous les éléments d'images est homogène et significatif, ledit traitement est associé à l'ensemble du bloc;
   - si le traitement associé à tous les éléments d'images est homogène mais indifférent, les éléments d'images de type I1 sont forcés en B2 et les éléments d'images de type I2 sont forcés en B3;
   - si les traitements associés à l'ensemble des éléments d'images du bloc sont hétérogènes mais cohérents, les éléments d'images à traitements indifférents sont forcés selon le type de traitement B1, B2, B3 des autres éléments d'images du bloc;
   - si les traitements associés à l'ensemble des éléments d'images du bloc sont hétérogènes et incohérents, on divise itérativement ledit bloc d'images jusqu'à y dégager des sous-blocs à traitement représentatif unique.

6. Procédé selon la revendication 1, caractérisé en ce qu'on réalise sur l'image une opération (42) de filtrage d'élimination d'éléments d'image isolés, ledit filtrage consistant à balayer l'image sous-échantillonnée avec une fenêtre mobile de filtrage de taille n x n éléments d'images, et de préférence 3 x 3 éléments d'images, et à modifier le traitement de sous-échantillonnage associé à au moins un élément d'image central pour chaque position sur l'image de la fenêtre mobile, au cas où le traitement associé audit élément d'image central est différent d'un traitement majoritaire et/ou d'un traitement moyen associé aux autres éléments d'images à l'intérieur de ladite fenêtre.

7. Procédé selon la revendication 6, caractérisé en ce que ladite opération (42) de filtrage d'élimination des blocs isolés est appliquée à un système de sous-échantillonnage comportant trois traitements distincts B1, B2, B3, les éléments d'images pouvant en outre, prendre deux types I1, I2 d'indifférence de traitement, en ce que, à l'intérieur de ladite fenêtre de filtrage, on liste l'ensemble des traitements associés aux éléments d'image non filtrés de la fenêtre selon l'ordre B1, I1, B2, I2, B3,
   et en ce que on force le traitement associé à l'élément d'image central de la fenêtre à la valeur médiane de ladite liste classée des traitements dans la fenêtre.

8. Procédé selon l'une quelconque des revendications 5 et 7, caractérisé en ce que les traitements B1, B2, B3 correspondent respectivement à un traitement de sous-échantillonnage d'images fixes, d'images à mouvements lents, et d'images à mouvements rapides respectivement,
   et en ce que lesdits éléments d'images de type I1, I2 sont indifférents pour les traitements images fixes/mouvements lents, et mouvements lents/mouvements rapides respectivement.

9. Procédé selon l'une quelconque des revendications 1 à 8, caractérisé en ce que ledit élément d'image est un bloc de n x n pixels, les calculs de distorsion étant réalisés sur l'ensemble dudit bloc.

**Claims**

1. Method for reallocating the choice of processing for sub-sampling upon the criterion of a bit rate reduction of a sequence of assistance data which serve in the reconstruction of a sub-sampled electronic image, especially a sequence of information for choice of processing the sub-sampling associated with each image element of a sub-sampled electronic image, the sub-sampling processing mode used for each image element consisting in picking an optimal processing mode chosen from at least three available processing modes tested in parallel, the efficiency of each processing mode being measured by a criterion of distortion of the processed signal with respect to the source signal, which method is characterised in that,
   - within the image or blocks of the image, image elements are determined (41) which are able indiscriminately to accept at least two distinct sub-sampling processing modes from the said at least three available processing modes, the said step (41) for selecting the image elements with indiscriminate processing modes consisting in searching out, for each image element, whether there is a set of indiscriminate processing modes, among the said at least three available processing modes, such that each of the processing modes belonging to the said set of indiscriminate processing modes satisfies both a condition of minimum distortion with respect to the other nonindiscriminate available processing modes, and a condition of distortion deviation thresheld with each of the other indiscriminate processing modes;
   - it is chosen (43) to associate with each of the said image elements with indiscriminate processing modes, that of the said indiscriminate processing modes allowing optimum reduction in the bit rate of assistance data.

2. Method according to Claim 1, characterised in that the said step (41) for selecting image elements with indiscriminate processing modes is implemented according to a process consisting in:
   - ordering the said available processing modes in order of increasing distortion of the processed signal with respect to the source signals;
   - determining among the set of processing mode pairs which can be formed among the said available processing modes, the pairs whose distortion deviation, in absolute value, is below a given acceptable threshold;
   - determining among the said available processing modes, the pertinent processing modes defined as being the first processing modes in the increasing order of distortion which exhibit pairwise a distortion deviation below the said given acceptable threshold;
   - the said pertinent processing modes being termed indiscriminate when they are at least two in number.

3. Method according to Claim 1, characterised in that the said step (41) for selecting image elements with indiscriminate processing modes consists in associating, with each of the processing mode pairs which can be formed among the set of available processing modes for the image element;
   - an ordering bit $(b_i)$, the said ordering bit associated with each of the said available processing mode pairs taking a first value when the first processing mode of the pair leads to a lower distortion than the second processing mode, and a second value in the contrary case;
   - a processing equivalence bit $(e_{ij})$, the said equivalence bit associated with each of the said available processing mode pairs taking a first value when the distortion deviation, in absolute value, between the two processing modes of the pair is below a given acceptable threshold, and a second value in the contrary case;
   and in that there is then read from a table (90) a processing pertinence bit $(c_i)$ associated with each processing mode, as a function of the combination of the values of the ordering bits and of the equivalence bits particular to the said image element.

4. Method according to Claim 1, characterised in that the said step (42) for the choice of the optimal processing mode, for the image elements with indiscriminate processing modes, consists in carrying out a process of hierarchical coding on image blocks of the said image, the said image blocks consisting of n.m image elements, the said process of hierarchical coding consisting in firstly attempting to select a single representative processing mode for all the image elements of the said image block, by exploring the set of acceptable processing modes according to the image elements with indiscriminate processing modes, then if appropriate in iteratively dividing the said block until sub-blocks with single representative processing mode are gleaned therefrom.

5. Method according to Claim 4, characterised in that three available sub-sampling processing modes B1, B2, B3 are defined, admitting two distinct types of image elements with indiscriminate processing modes I1, I2, and in that the said process of hierarchical coding is applied over an initial block of n x n image elements, according to the following steps:
- if the processing mode associated with all the image elements is homogeneous and significant, the said processing mode is associated with the whole of the block;
- if the processing mode associated with all the image elements is homogeneous but indiscriminate, the image elements of type I1 are prescribed under B2 and the image elements of type I2 are prescribed under B3;
- if the processing modes associated with the set of image elements of the block are heterogeneous but coherent, the image elements with indiscriminate processing modes are prescribed according to the type of processing mode B1, B2, B3 of the other image elements of the block;
- if the processing modes associated with the set of image elements of the block are heterogeneous and incoherent, the said image block is divided iteratively until sub-blocks with single representative processing mode are gleaned therefrom.

6. Method according to Claim 1, characterised in that a filtering operation (42) for eliminating isolated image elements is carried out on the image, the said filtering consisting in scanning the sub-sampled image with a moving filtering window n x n image elements, and preferably 3 x 3 image elements, in size, and in modifying the sub-sampling processing mode associated with at least one central image element for each position over the image of the moving window, in the case where the processing mode associated with the said central image element is different from a majority processing mode and/or from a mean processing mode associated with the other image elements inside the said window.

7. Method according to Claim 6, characterised in that the said filtering operation (42) for eliminating isolated blocks is applied to a sub-sampling system comprising three distinct processing modes B1, B2, B3, the image elements being capable moreover, of taking two types I1, I2 of processing mode indiscriminateness, in that, inside the said filtering window, the set of processing modes associated with the unfiltered image elements of the window are listed in the order B1, I1, B2, I2, B3,
and in that the processing mode associated with the central image element of the window is prescribed with the median value of the said classified list of processing modes in the window.

8. Method according to either one of Claims 5 or 7, characterised in that the processing modes B1, B2, B3 correspond respectively to a sub-sampling processing of still images, of slow motion images, and of fast motion images respectively,
and in that the said image elements of type I1, I2 are indiscriminate in respect of the still image/slow motion, and slow motion/fast motion processing modes respectively.

9. Method according to any one of Claims 1 to 8, characterised in that the said image element is a block of n x n pixels, the distortion computations being carried out over the whole of the said block.

**Patentansprüche**

1. Verfahren zur Wiederzuordnung eines Unterabtastungsverfahrens nach dem Kriterium einer Datenraten-Reduktion einer Folge von Hilfsdaten, die zur Rekonstruktion eines unterabgetasteten elektronischen Bildes dienen, insbesondere einer Folge der Unterabtastungsverfahrens-Informationen, die jedem Element eines unterabgetasteten elektronischen Bildes zugeordnet sind, wobei das für jedes Bildelement angewandte Unterabtastungsverfahren darin besteht, daß ein Optimalverfahren unter mindestens drei verfügbaren, parallel zueinander getestete Verfahren, gewählt wird, wobei die Effektivität eines jeden Verfahrens durch ein Verzerrungskriterium für das verarbeitete Signal im Vergleich zum Ursprungssignal gemessen wird, dadurch gekennzeichnet, daß

- im Inneren der Bilder oder der Bilderblöcke Bildelemente festgelegt werden (41), die in der Lage sind, zumindest zwei verschiedene Unterabtastungsverfahren unter den mindestens drei verfügbaren Verfahren ohne Bevorzugung anzunehmen, wobei der Schritt (41) zur Auswahl derjenigen Bildelemente, die kein Unterabtastungsverfahren bevorzugen, darin besteht, daß für jedes Bildelement untersucht wird, ob es unter den besagten mindestens drei verfügbaren Verfahren eine Menge indifferenter Verfahren gibt, derart, daß jedes der Verfahren aus der Gruppe indifferenter Verfahren gleichzeitig eine minimale Verzerrungsbedingung im Vergleich zu den anderen verfügbaren, nicht indifferenten Verfahren, und eine Bedingung begrenzter Verzerrungsabweichung zu jedem der anderen indifferenten Verfahren erfüllt;
- man zu jedem der besagten Bildelemente, die kein Verfahren bevorzugen, dasjenige unter den indifferenten Verfahren auswählt (43), das eine optimale Reduzierung der Hilfsdatenrate ermöglicht.

2. Verfahren nach Anspruch 1, dadurch gekennzeichnet, daß der Schritt (41) zur Auswahl der Bildelemente, die kein Verfahren bevorzugen, in folgenden Schritten abläuft:
   - Die verfügbaren Verfahren werden in der Reihenfolge zunehmender Verzerrung des behandelten Signals im Vergleich zum Ausgangssignal geordnet;
   - Aus der Menge von Verfahrenspaaren, die unter den verfügbaren Verfahren gebildet werden können, werden diejenigen Paare bestimmt, für welche der Absolutwert der Verzerrungsabweichung kleiner ist, als ein gegebener akzeptabler Schwellenwert;
   - Aus den besagten Verfahren werden die relevanten Verfahren festgelegt, die definiert sind als in der Reihenfolge zunehmender Verzerrung an erster Stelle stehend, die paarweise eine Verzerrungsabweichung aufweisen, die kleiner ist als der akzeptable Schwellenwert;
   - Die relevanten Verfahren werden als indifferente Verfahren bezeichnet, wenn es mindestens zwei sind.

3. Verfahren nach Anspruch 1, dadurch gekennzeichnet , daß der Schritt (41) zur Auswahl der Bildelemente, die kein Verfahren bevorzugen, darin besteht, daß jedem der Paare, welche aus der Menge der für das Bildelement verfügbaren Verfahren gebildet werden kann, folgendes zugeordnet werden kann:
   - ein Ordnungsbit (bi), wobei das Ordnungsbit, welches jedem der verfügbaren Verfahrenspaare zugeordnet ist, einen ersten Wert annimmt, wenn das erste auf dem Paar angewandte Verfahren zu einer Verzerrung führt, die kleiner ist als diejenige des zweiten Verfahrens oder andernfalls einen zweiten Wert annimmt;
   - ein Verfahrensäquivalenzbit (eij), wobei das Verfahrensäquivalenzbit, welches jedem der verfügbaren Verfahrenspaare zugeordnet ist, einen ersten Wert annimmt, wenn der Absolutwert der Verzerrungsabweichung zwischen den beiden auf dem Paar angewandten Verfahren kleiner als ein gegebener akzeptabler Schwellenwert ist oder andernfalls einen zweiten Wert annimmt;
   und daß danach in einer Tabelle (90) in Abhängigkeit von der Kombination der Zuordnungsbitwerte und der Äquivalenzbitwerte, welche für das Bildelement gültig sind, ein Verfahrensrelevanzbit (ci) zu jedem Verfahren ausgelesen wird.

4. Verfahren nach Anspruch 1, dadurch gekennzeichnet, daß der Schritt (43) zur Auswahl des optimalen Verfahrens für die Bildelemente, die kein Verfahren bevorzugen, darin besteht, daß Bildblöcke des Bildes einem hierarchischen Kodierungsverfahren unterworfen werden, wobei die Bildblöcke aus n x m Bildelementen bestehen, und wobei das hierarchische Kodierungsverfahren darin besteht, das zunächst der Versuch unternommen wird, ein einziges gültiges Verfahren für alle Bildelemente des Blocks dadurch auszuwählen, daß die Menge akzeptabler Verfahren untersucht wird, die für die Bildelemente gelten, die kein Verfahren bevorzugen, und danach notfalls der besagte Block so lange iterativ geteilt wird, bis Unterblöcke gewonnen werden, für die ein einziges gültiges Verfahren existieren.

5. Verfahren nach Anspruch 4, dadurch gekennzeichnet, daß drei verfügbaren Unterabtastungsverfahren B1, B2, B3 festgelegt werden, welche zwei verschiedene Typen von Bildelementen I1, I2, die kein Verfahren bevorzugen, zulassen,
   und daß das hierarchische Kodierungsverfahren auf einen Anfangsblock von n x n Bildelementen in folgenden Schritten angewandt wird:
   - wenn das allen Bildelementen zugeordnete Verfahren homogen und signifikant ist, wird dieses Verfahren dem Gesamtblock zugeordnet;

- wenn das allen Bildelementen zugeordnete Verfahren homogen aber indifferent ist, werden die Bildelemente des Typs I1 dem Verfahren B2 und die Bildelemente des Typs I2 dem Verfahren B3 zugewiesen;
- wenn die mit der Gesamtheit der Bildelemente des Blocks zugeordneten Verfahren hetorogen aber kohärent sind, werden die Bildelemente, die kein Verfahren bevorzugen, den Verfahrenstypen B1, B2, B3 der anderen Bildelemente des Blocks zugewiesen;
- wenn die mit der Gesamtheit der Bildelemente des Blocks zugeordneten Verfahren heterogen und inkohärent sind, wird der Bildblock so lange iterativ geteilt, bis Unterblöcke gewonnen werden, für die ein einziges gültiges Verfahren existieren.

6. Verfahren nach Anspruch 1, dadurch gekennzeichnet, daß das Bild einer Operation (42) zur Herausfilterung isolierter Bildelemente unterworfen wird, wobei die Filterung darin beseht, daß das unterabgetastete Bild über ein bewegliches Filterfenster der Größe n x n Bildelemente, bevorzugterweise 3 x 3 Bildelemente, abgetastet wird und darin, daß das mit mindestens zu einem zentralen Bildelement für jede Position auf dem Bild des beweglichen Fensters zugeordnete Unterabtastungsverfahren dann modifiziert wird, wenn das dem betreffenden zentralen Bildelement zugeordnete Verfahren von einem mehrheitlich angewandtem Verfahren und/oder von einem durchschnittlichen Verfahren abweicht, welches den anderen Bildelementen im Inneren des Fensters zugeordnet ist.

7. Verfahren nach Anspruch 6, dadurch gekennzeichnet, daß die Filteroperationion zur Herausfilterung (42) von isolierten Blöcken auf ein Unterabtastungsverfahren angewandt wird, welches drei verschiedene Verfahren B1, B2, B3 beinhaltet, wobei die Bildelemente außerdem von dem Typ I1, I2 sein können, die kein von Verfahren bevorzugen, daß man innerhalb des Filterfensters die Menge der Verfahren, welche den nicht aus dem Fenster herausgefilterten Bildelementen entsprechen, in der Reihenfolge B1, I1, B2, I2, B3 auflistet,

und daß das Verfahren, welches dem zentralen Bildelement des Fensters zugeordnet ist, zwangsmäßig dem Mittelwert der besagten geordneten Liste der Verfahren innerhalb des Fensters zugewiesen wird.

8. Verfahren nach einem der Ansprüche 5 und 7, dadurch gekennzeichnet, daß die Verfahren B1, B2, B3 jeweils einem Unterabtastungsverfahren entsprechen, welches auf feststehende Bilder, auf langsam bewegte Bilder bzw. auf schnell bewegte Bilder angewandt wird,

und dadurch, daß die Bildelemente der Typen I1, I2, kein Verfahren für feststehende/langsam bewegte Bilder, bzw. langsam bewegte/schnell bewegte Bilder bevorzugen.

9. Verfahren nach einem der Ansprüche 1 bis 8, dadurch gekennzeichnet, daß das Bildelement aus einem Block aus n x n Pixeln besteht, wobei die Verzerrungsberechnungen für den gesamten Block durchgeführt werden.

FIG.1

FIG.2

FIG.3

IMAGE D'ORIGINE

MULTITRAITEMENT DES
ELEMENTS D'IMAGE, ET
CALCULS DE DISTORSIONS    40

DETERMINATION DES
ELEMENTS D'IMAGE
À TRAITEMENTS INDIFFERENTS    41

FILTRAGE LOGIQUE
DES ELEMENTS ISOLES    42

44

FILTRAGE DES
ELEMENTS
INDIFFERENTS
CODAGE
HIERARCHIQUE    43

REPRESENTATION    45

FIG.4

SIGNAL COMPRIME
TRANSMIS

51

52

54

53

= FIXE

= MOBILE

(A)

0

1   1   0

1   1   1   1

0

1   1   1   1

0 = SUBDIVISION
1 = BLOC HOMOGENE

(B)

FIG.5

19

FIG.6

FIG_7

FIG_8

## FIG.9a

EQUIVALENCE

| $E_{12}\,E_{23}\,E_{13}$ / $b_1 b_2 b_3$ | 000 | 001 | 010 | 011 | 100 | 101 | 110 | 111 |
|---|---|---|---|---|---|---|---|---|
| 000 | 000 | 001 | ▨ | 001 | ▨ | 011 | ▨ | 011 |
| 001 | 000 | ▨ | ▨ | ▨ | 010 | 011 | 010 | 011 |
| 100 | 000 | ▨ | 001 | 001 | ▨ | ▨ | 100 | 101 |
| 110 | 000 | ▨ | ▨ | ▨ | 100 | 100 | 101 | 101 |
| 011 | 000 | ▨ | 010 | 110 | ▨ | ▨ | 010 | 110 |
| 111 | 000 | 100 | ▨ | 110 | ▨ | 100 | ▨ | 110 |

ORDONNANCEMENT

▨ NON VALIDE

## FIG.9b

t    t+1   t+2

## FIG.10a

| 1  2   5   6 | 17 ····· | 33 ····· | |
|--|--|--|--|
| 3  4   7   8 | | | |
| 9  10  13  14 | | | |
| 11 12  15  16 | | | |

## FIG.10b

## FIG.11

$$\underline{\text{FIG.12}}$$